# EUROPEAN PATENT SPECIFICATION

(11) **EP 2 782 351 B1**
(45) Date of publication and mention of the grant of the patent: **20.06.2018**
(21) Application number: 13183776.7
(22) Date of filing: 10.09.2013
(51) Int. Cl.: H04N 21/41, H04N 21/442, H04N 21/4623, H04N 21/434, H04N 21/435, H04N 21/436, H04N 21/4627

(54) **Set-top box, display apparatus and method of controlling the same**
Set-Top-Box, Anzeigevorrichtung und Steuerungsverfahren dafür
Décodeur, appareil d'affichage et son procédé de contrôle

(30) Priority: 22.03.2013 KR 20130031117
(43) Date of publication of application: 24.09.2014
(73) Proprietor: Samsung Electronics Co., Ltd., Gyeonggi-do 443-742 (KR)
(72) Inventor: Kim, Moon-ju, Chungcheongnam-do (KR)
(74) Representative: Appleyard Lees IP LLP

(56) References cited:
- EP-A1- 2 512 129
- EP-A2- 2 503 778
- WO-A1-2009/003133
- US-A1- 2010 211 988
- US-A1- 2010 332 565
- US-A1- 2011 249 126
- US-A1- 2012 002 952
- US-B1- 8 370 507

## Description

### BACKGROUND

### Field

Apparatuses and methods consistent with the exemplary embodiments relate to set-top boxes, display apparatuses and methods of controlling the same, and more particularly, to set-top boxes, display apparatuses and methods of controlling the same, which provide an improved channel changing speed.

### Description of the Related Art

In line with the development of digital multi-channel broadcasting, a conditional access system (CAS) is used.

The CAS is a system enabling only subscribers who pay subscription fee to descramble and view contents which are scrambled to protect broadcasting contents.

The CAS operates as follows.

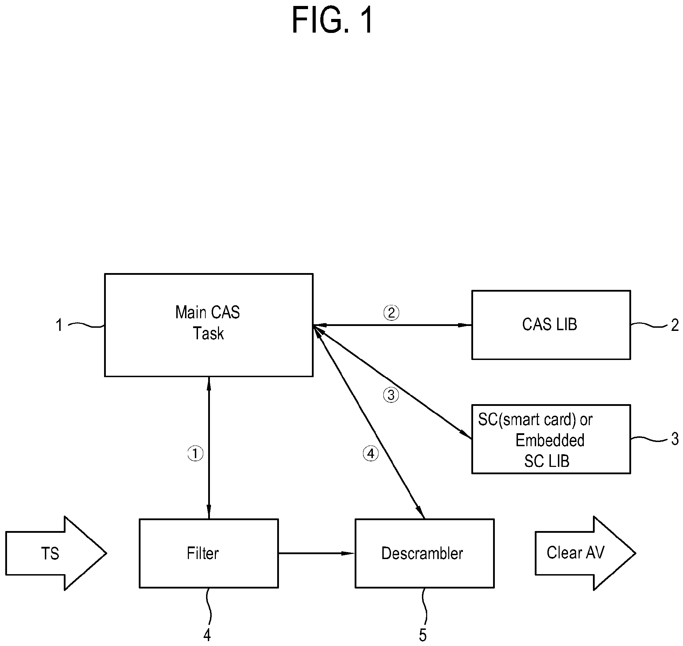

FIG. 1 is a schematic view of the CAS.

As shown therein, the CAS includes a main CAS task 1, a CAS library 2, a smart card (SC) or embedded SC library 3, a filter 4 and a descrambler 5.

A scrambled digital broadcasting signal which is provided in the form of a transport stream (TS) includes additional information such as program association table (PAT), program map table (PMT) and conditional access table (CAT) as well as scrambled contents.

Firstly, the filter 4 extracts the additional information such as PAT, PMT and CAT from the TS signal (①). After parsing the extracted additional information and obtaining a packet identification (ID) from each table, the main CAS task 1 transmits the packet ID to the CAS library 2 and the SC or embedded SC library 3, compares the packet ID with data of the libraries 2 and 3, checks whether a user has the authority to view the contents, and obtains a control word (CW) for descrambling the scrambled contents (② and ③). The main CAS task 1 transmits the obtained CW to the descrambler 5 of the set-top box (④).

Then, the descrambler 5 of the set-top box descrambles the scrambled contents with the CW, and allows the authorized user, i.e., the subscriber to view broadcasting.

If a user changes a channel while viewing a digital broadcasting, the CAS should perform all of the aforementioned operations and accordingly predetermined time is needed to change the channel.

To improve the channel changing speed, various methods have been provided.

For example, an external device is additionally provided to extract and store in advance additional information such as PAT, PMT and CAT from a TS signal and provide the additional information to the set-top box.

Otherwise, in the case of a set-top box including a plurality of tuners, while a tuner is allotted to a scrambled channel, other unused tuners are used to perform the operations ①, ② and ③ with respect to channels in other frequency bands in advance. In this case, when the user changes the channel to another channel in a different frequency, the set-top box dose not perform the operations ①, ② and ③ and the descrambler 5 may descramble the scrambled contents of the channel in the concerned frequency.

Additional provision of the external device requires additional costs. In the case of using the plurality of tuners included in the set-top box, the number of the tuners is limited, and the tuners are not applicable to the set-top box which supports only one tuner.

### SUMMARY

Accordingly, one or more exemplary embodiments provide a set-top box, a display apparatus and a method of controlling the same, which provide an improved channel changing speed.

The foregoing and/or one aspect may be achieved by providing a method of controlling a set-top box, for determining whether a user has an authority to use contents of an image signal, the method including: receiving information on whether at least one display apparatus can receive the image signal; requesting a display apparatus, which is capable of receiving the image signal, to process the additional information of the image signal based on the information; receiving the additional information of the image signal from the display apparatus; and determining whether a user has the authority to use contents of the image signal based on the additional information of the image signal received from the display apparatus.

The method may further include storing the additional information of the image signal transmitted by the display apparatus.

The additional information of the image signal may include program association table (PAT), program map table (PMT) and conditional access table (CAT).

The set-top box may be connected to the at least one display apparatus within a network using the same frequency band.

The display apparatus may notify the set-top box that the display apparatus is not capable of receiving the image signal if the display apparatus is not capable of receiving the image signal, and the set-top box may suspend requesting the display apparatus to process the additional information of the image signal and determines whether another display apparatus in the network is capable of receiving the image signal.

The requesting the display apparatus which is capable of receiving the image signal to process the additional information of the image signal may include transmitting broadcasting service information to the display apparatus.

The broadcasting service information may include a frequency, and the display apparatus comprises a tuner for receiving the image signal.

The broadcasting service information may include an Internet Protocol (IP) address, and the display apparatus comprises an IP input part for receiving the image signal.

Another aspect may be achieved by providing a method of controlling a display apparatus which is capable of receiving an image signal disclosed above, the method including: transmitting information on capability of receiving the image signal to a set-top box; receiving a request from the set-top box to process the additional information of the image signal; processing the additional information of the image signal; and transmitting the processed additional information to the set-top box.

Further another aspect may be achieved by providing a set-top box which is configured to determine whether a user has an authority to use contents of an image signal, the set-top box including: a receiver which is capable of receiving the image signal; a communication part which is configured to communicate with at least one display apparatus; and a controller which is configured to control the communication part to receive information on the capability of receiving the image signal from the at least one display apparatus and to request the display apparatus which is capable of receiving the image signal to process the additional information of the image signal based on the information and determines whether a user has the authority to use contents of the image signal based on the additional information of the image signal received from the display apparatus.

The set-top box may further include a storage part which is configured to store therein the additional information of the image signal transmitted by the display apparatus.

The additional information of the image signal may include PAT, PMT and CAT.

Still another aspect may be achieved by providing a display apparatus which is capable of receiving an image disclosed in any one of claims 10 to 12, the display apparatus including: a communication part which is configured to communicate with a set-top box; a signal processor which is configured to process the image signal transmitted by the set-top box; a display unit which is configured to display the processed image signal thereon; a receiver which is configured to process the additional information of the image signal; and a controller which is configured to control the communication part to transmit to the set-top box the information on capability of receiving the image signal, process the additional information of the image signal in response to the request from the set-top box, and control the communication part to transmit the processed additional information to the set-top box.

Broadcasting service information may be transmitted by the set-top box when the set-top box requests the display apparatus to process the additional information of the image signal.

Also another aspect may be achieved by providing a method of controlling a system comprising at least one display apparatus and a set-top box which determines whether a user has an authority to use contents of an image signal, the method including: receiving information on whether the set-top box can receive an image signal from the at least one display apparatus; requesting, by the set-top box, to process the additional information of the image signal, to the display apparatus which is capable of receiving the image signal based on the information; processing the additional information of the image signal, by the display apparatus which has received the request; transmitting the additional information of the image signal by the display apparatus to the set-top box; and determining, by the set-top box, whether a user has the authority to use contents of the image signal based on the additional information of the image signal transmitted by the display apparatus.

As described above, the one or more exemplary embodiments provide the set-top box, the display apparatus and the method of controlling the same, which provide the improved channel changing speed

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic view of a conditional access system (CAS);
FIG. 2 is a schematic view of a system including a set-top box and at least one display apparatus according to an embodiment;
FIG. 3 is a block diagram illustrating receivers of a set-top box and at least one display apparatus according to the embodiment;
FIG. 4 is a block diagram of a system in which receivers of the display apparatus in FIG. 3 are tuners;
FIG. 5 is a block diagram of a system in which the receivers of the display apparatus in FIG. 3 are IP input parts;
FIG. 6 is a block diagram of a configuration of the set-top box and the display apparatus according to the embodiment; and
FIG. 7 is a flowchart for explaining a method of controlling the system including the set-top box and at least one display apparatus according to the embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

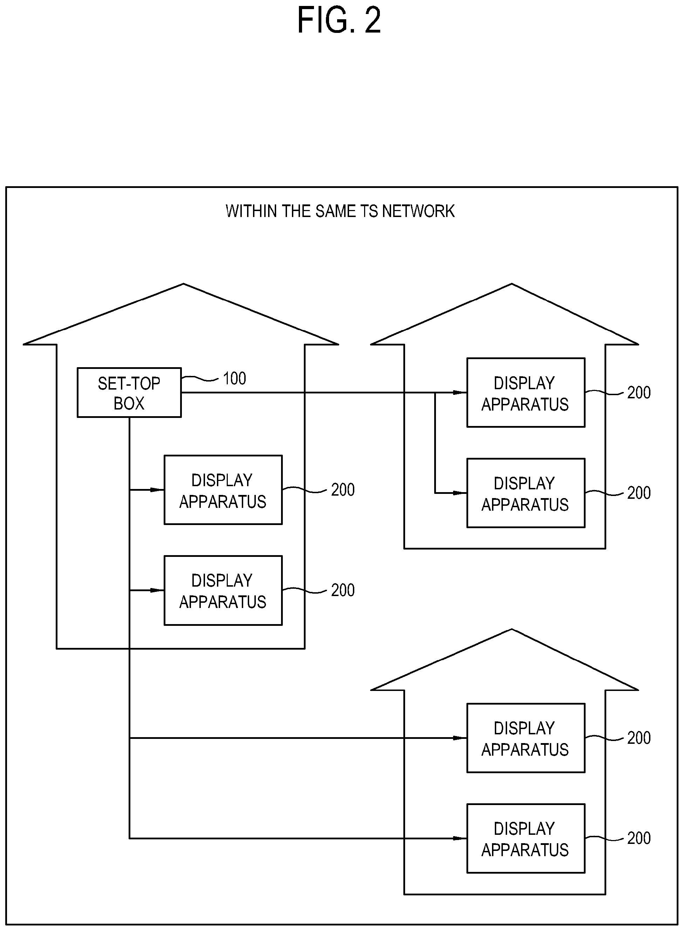

FIG. 2 is a schematic view of a system including a set-top box and at least one display apparatus according to an embodiment.

Referring to FIG. 2, the set-top box 100 according to the embodiment may support a conditional access system (CAS) allowing only a subscriber who pays subscription fee to descramble and view contents scrambled to protect broadcasting contents, and may be connected to at least one display apparatus 200.

As shown in FIG. 2, the set-top box 100 and at least one display apparatus 200 according to the embodiment are provided in a transport stream (TS) network using the same broadcasting frequency band. For example, the set-top box 100 and at least one display apparatus 200 may be provided within the same broadcast territory.

The display apparatus 200 may include a television (TV) but may include any device as long as it can be connected to the set-top box 100 and have a receiver capable of receiving an image signal.

The image signal may include a scrambled digital broadcasting signal which is received in the form of a TS.

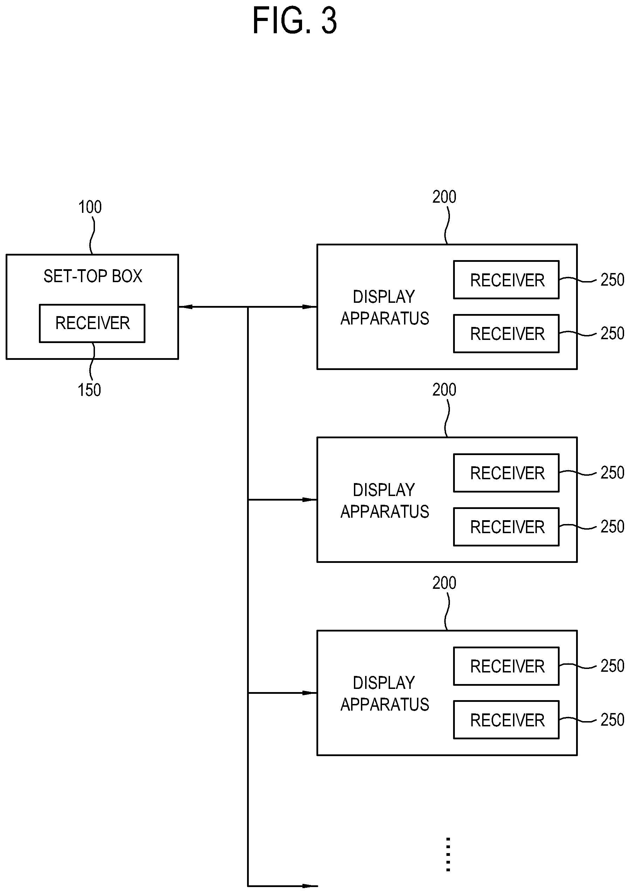

FIG. 3 is a block diagram of receivers 150 and 250 of the set-top box 100 and the at least one display apparatus 200 according to the embodiment.

As shown therein, the set-top box 100 and the display apparatus 200 include at least one receiver 150 and 250, respectively.

The receivers 150 and 250 receive an image signal, and the receiver 250 of the display apparatus 200 may include tuners 251 or Internet Protocol (IP) input parts 252.

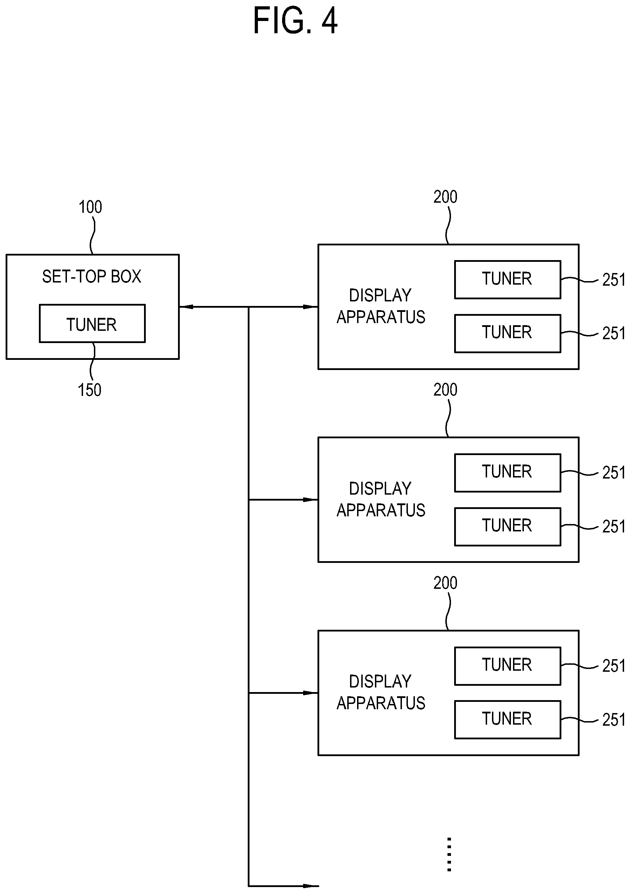

FIG. 4 is a block diagram of a system in which the receivers of the display apparatus 200 in FIG. 3 are tuners.

If the display apparatus 200 includes the tuners 251 as the receiver 250, the set-top box 100 may transmit frequency information as information of a predetermined broadcasting service, i.e. a predetermined channel to request the tuners 251 of the display apparatus 200 to process additional information of an image signal.

The additional information of the image signal may include program association table (PAT), program map table (PMT) and conditional access table (CAT) to determine whether a user has the authority to use contents of the image signal.

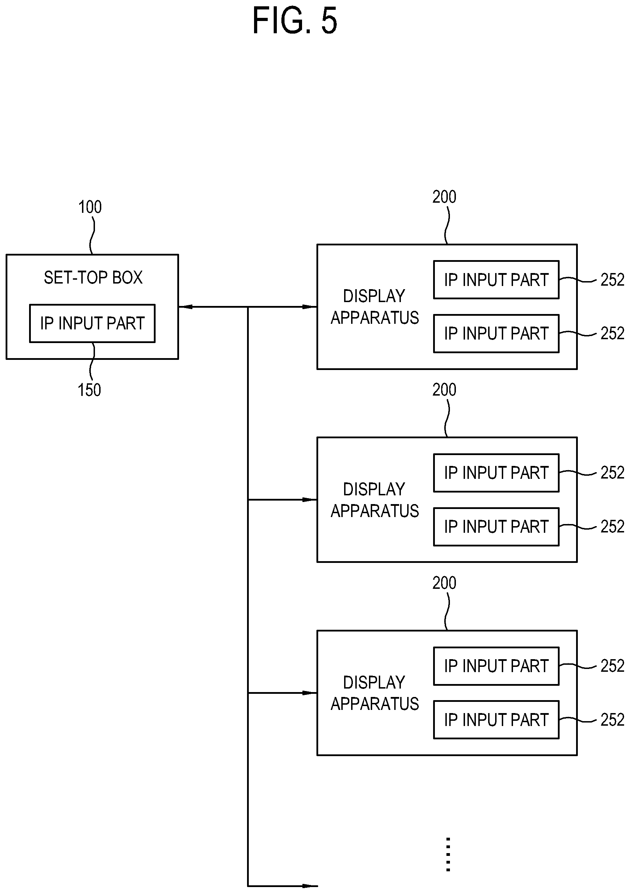

FIG. 5 is a block diagram of a system in which the receiver of the display apparatus 200 in FIG. 3 are IP input parts 252.

If the display apparatus 200 includes the IP input parts 252 as the receiver 250, the set-top box 100 may transmit IP address as information of a predetermined broadcasting service, i.e., a predetermined channel to request the IP input parts 252 of the display apparatus 200 to process additional information of an image signal.

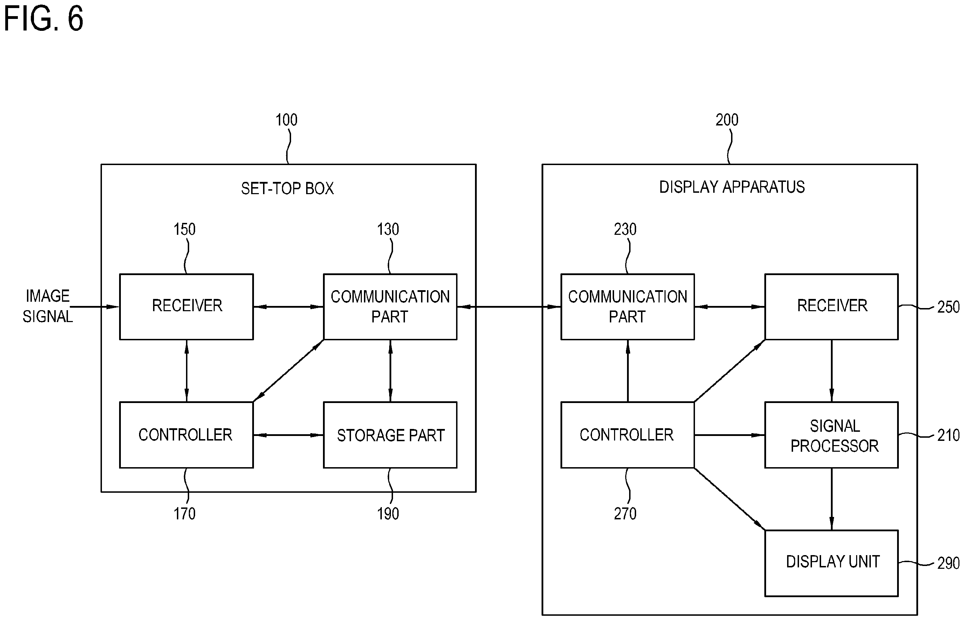

FIG. 6 is a block diagram of a configuration of the set-top box 100 and the display apparatus 200 according to the embodiment.

The set-top box 100 which determines whether the user has the authority to use the contents of the image signal includes a receiver 150 which receives an image signal; a communication part 130 which communicates with the at least one display apparatus 200; and a controller 170 which controls the communication part 130 to receive information on capability of receiving an image signal from the at least one display apparatus 200, and to request the display apparatus 200 which is capable of receiving the image signal to process the additional information of the image signal based on the information, and determines whether the user has the authority to use the contents of the image signal based on the additional information of the image signal transmitted by the display apparatus 200.

The set-top box 100 may further include a storage part 190 which stores therein the additional information of the image signal transmitted by the display apparatus 200. The additional information may be stored as a database in the storage part 190.

The display apparatus 200 includes a communication part 230 which communicates with the set-top box 100; a signal processor 210 which processes the image signal received from the set-top box 100; a display unit 290 which displays the processed image signal thereon; a receiver 250 which processes the additional information of the image signal; and a controller 270 which controls the communication part 230 to transmit to the set-top box 100 the information on capability of receiving the image signal, processes the additional information of the image signal in response to the request from the set-top box 100, and controls the communication part 230 to transmit the processed additional information to the set-top box 100.

The receivers 150 and 250 receive the image signal as explained above, and include a tuner 251, an IP input part 252, or the like.

The image signal may include a scrambled digital broadcasting signal which is received in the form of a TS. The broadcasting signal further includes additional information such as PAT, PMT and CAT as well as the scrambled contents.

Returning to FIG. 1, the receivers 150 and 250 may extract the additional information such as PAT, PMT and CAT from the image signal by using the filter 4 in the CAS, obtain the packet ID from each table by parsing the extracted additional information, transmit the packet ID to and compare the packet ID with the data of the CAS library 2 and the SC or embedded SC library 3, check whether the user has the authority to view contents, and obtain a control word (CW) for descrambling the scrambled contents.

The communication parts 130 and 230 enable communication between the set-top box 100 and at least one display apparatus 200.

The controller 170 of the set-top box 100 controls the communication part 130 to request and receive the information on capability of receiving the image signal from the at least one display apparatus 200 and to request the display apparatus 200 which is capable of receiving the image signal to process the additional information of the image signal based on the received information, and determines whether the user has the authority to use the contents of the image signal based on the additional information of the image signal transmitted by the display apparatus 200.

The controller 270 of the display apparatus 200 controls the communication part 230 to transmit to the set-top box 100 the information on the capability of receiving the image signal in response to the request from the set-top box 100, and if the receiver 250 is capable of receiving the image signal, to process the additional information of the image signal in response to the request from the set-top box 100, and to transmit the processed additional information to the set-top box 100.

As explained above, the set-top box 100 receives and stores in advance the additional information of the image signal received and processed by the receiver 250 of the display apparatus 200, and when the user changes broadcasting service, may promptly descramble the scrambled image signal based on the previously processed and stored additional information without newly processing the additional information.

The image signal descrambled by the set-top box 100 is transmitted to the signal processor 210 of the display apparatus 200, and processed to be displayable on the display unit 290 of the display apparatus 200.

The processed image signal may be displayed on the display unit 290 of the display apparatus 200.

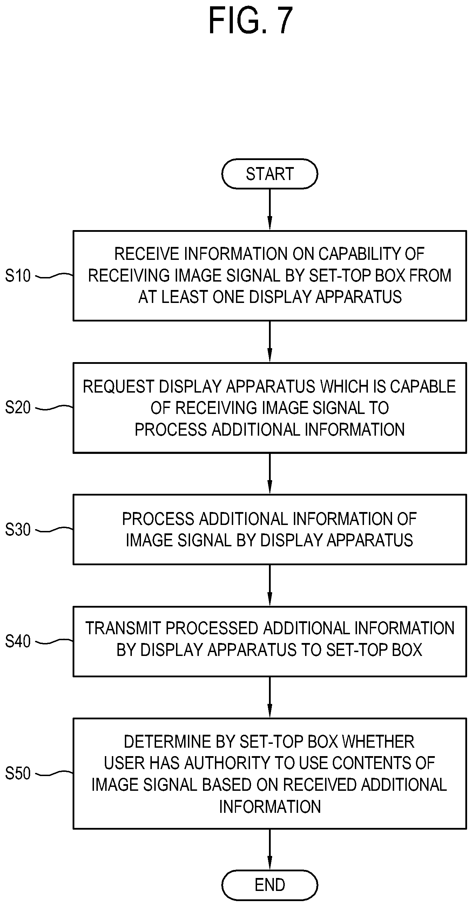

FIG. 7 is a flowchart for explaining a method of controlling the system including the set-top box 100 and at least one display apparatus 200 according to the embodiment.

Firstly, the set-top box 100 asks at least one display apparatus 200 whether the at least one display apparatus 200 is capable of receiving an image signal, and receives information on the capability of receiving the image signal from the respective display apparatuses 200 (S10). The respective display apparatuses 200 may transmit to the set-top box 100 information on the number of the unused receiver 250 such as the unused tuners 251 or IP input parts 252.

The set-top box 100 transmits broadcasting service information to the display apparatus 200 which is capable of receiving the image signal and requests the display apparatus 200 to process the additional information of the image signal, based on the information provided by the respective display apparatuses 200 (S20). The broadcasting service information may include frequency information if the receiver 250 are the tuners 251, and may include IP information if the receiver 250 are the IP input parts 252. The number of the broadcasting service information corresponds to the number of the unused receiver 250 in the display apparatus 200. For example, if the receiver 250 are the tuners 251, a tuner may process the additional information of the image signal corresponding to a frequency. Thus, the number of frequency information transmitted to the display apparatus 200 by the set-top box 100 corresponds to the number of the unused tuners 251.

The display apparatus 200 which receives the request processes the additional information of the image signal through its receiver 250. The operation of the receiver 250 in the CAS is the same as explained above.

The display apparatus 200 transmits the processed additional information of the image signal to the set-top box 100. In the CAS, the additional information may include information such as PAT, PMT and CAT.

The set-top box 100 determines whether a user has the authority to use the contents of the image signal based on the additional information of the image signal transmitted by the display apparatus 200. The set-top box 100 may obtain the packet ID from the respective tables PAT, PMT and CAT by parsing the additional information, transmit the packet ID to and compare the packet ID with the data of the CAS library 2 and the SC or embedded SC library 3, check whether the user has the authority to view, and obtain the CW for descrambling scrambled contents. After the CW is obtained, the set-top box 100 descrambles the scrambled contents through the descrambler 5, and allows the user having the authority to use the contents, i.e., the subscriber to view broadcasting.

As explained above, the set-top box 100 receives, processes and stores in advance, the additional information of the image signal through the unused receiver 250 of the display apparatus 200 as well as through the receiver 150 of the set-top box 100, and when the user changes the broadcasting service, may promptly descramble the scrambled image signal based on the previously processed and stored additional information without newly processing the additional information. Thus, the set-top box, the display apparatus and the method of controlling the same according to the embodiment provides the improved channel changing speed.

## Claims

1. A method of controlling a set-top box (100), for determining whether a user has an authority to use contents of an image signal corresponding to a plurality of broadcasting services,
the set-top box (100) being connected to a plurality of display apparatuses (200) within a network using the same frequency band.
comprising:
the set-top box (100) asking a first display apparatus (200) of the plurality of display apparatuses, whether the first display apparatus comprises at least one available receiver;
in response to a response that the first display apparatus comprises the at least one available receiver
the set-top box
- requesting the first display apparatus (200) to process the additional information of the image signal through the at least one available receiver,
- receiving processed additional information of the image signal from the first display apparatus (200), and
- storing the processed additional information of the image signal received from the first display apparatus (200) .
in response to a response that the first display apparatus does not comprise the at least one available receiver,
the set-top box (100)
- suspending requesting the first display apparatus (200) to process the additional information of the image signal and
determining whether at least one second display apparatus (200) of the plurality of display apparatuses comprises at least one available receiver to request processing the additional information of the image signal thereto,
in response to a response that the at least one second display apparatus comprises the at least one available receiver
- receiving processed additional information of the image signal from the at least one second display apparatus (200), and
- storing the processed additional information of the image signal received from the at least one second display apparatus (200) ; and
if a broadcasting service is changed to one of the plurality of broadcasting services of the image signal by a user's input, parsing the processed additional information being stored, to obtain entitlement management information capable of determining the authority to use contents of the image signal and comparing the obtained entitlement management information with data in a smart card of the set-top box (100) to determine whether the user has the authority to use a content corresponding to the changed broadcasting service.

2. The method according to claim 1, wherein the additional information of the image signal comprises program association table (PAT), program map table (PMT) and conditional access table (CAT).

3. The method according to any preceding claim, wherein the requesting the first display apparatus (200) to process the additional information of the image signal comprises transmitting broadcasting service information to the first display apparatus (200).

4. The method according to claim 3, wherein the broadcasting service information comprises a frequency, and the display apparatus (200) comprises a receiver in the form of a tuner (251) for receiving the image signal.

5. The method according to claim 3, wherein the broadcasting service information comprises an Internet Protocol (IP) address, and the display apparatus (200) comprises receiver in the form of an IP input part (252) for receiving the image signal.

6. A method of controlling a display apparatus (200) which is capable of receiving an image signal corresponding to a plurality of broadcasting services as in any one of claims 1 to 5, comprising:
the display apparatus receiving an inquiry from a set-top box (100), asking whether the display apparatus comprises at least one available receiver; if the display apparatus comprises the at least one available receiver,the display apparatus transmitting a response to the set-top box (100), that the display apparatus comprises the at least one available receiver
the display apparatus receiving a request from the set-top box (100) to process additional information of the image signal through the at least one available receiver thereof;
the display apparatus processing the additional information of the image signal through the at least one available receivers thereof; and
the display apparatus transmitting the processed additional information to the set-top box (100).

7. A set-top box (100) which is configured to determine whether a user has an authority to use contents of an image signal corresponding to a plurality of broadcasting services, the set-top box (100) comprising:
a receiver (150) which is capable of receiving the image signal;
a communication part (130) which is configured to communicate with a plurality of display apparatuses (200);
a storage (190); and
a controller (170),
the controller (170) being configured:
- to control the communication part to ask a first display apparatus (200) of the plurality of display apparatuses whether the first display apparatus comprises at least one available receiver,
- to request, in response to a response that the first display apparatus comprises the at least one available receiver from the first display apparatus, the first display apparatus (200) to process additional information of the image signal through the at least one available receiver,
- to receive processed additional information of the image signal from the first display apparatus (200), and
- to store, in the storage (190), the processed additional information of the image signal received from the first display apparatus (200);
to determine, in response to a response that the first display apparatus does not comprise the at least one available receiver from the first display apparatus, whether at least one second display apparatus (200) of the plurality of display apparatuses comprises at least one available receiver to request processing the additional information of the image signal thereto, and in response to a response that the at least one second display apparatus comprises the at least one available receiver
- to receive processed additional information of the image signal from the at least one second display apparatus (200), and
- to store, in the storage (190), the processed additional information of the image signal received from the at least one second display apparatus (200); and
if a broadcasting service is changed to one of the plurality of broadcasting services of the image signal by a user's input, to parse the processed additional information stored in the storage (190) to obtain entitlement management information capable of determining the authority to use contents of the image signal, compare the obtained entitlement management information with data in a smart card of the set-top box (100), and determine whether a user has the authority to use a content corresponding to the changed broadcasting service.

8. The set-top box (100) according to claim 7, wherein the additional information of the image signal comprises PAT, PMT and CAT.

9. A display apparatus (200) which is capable of receiving an image signal corresponding to a plurality of broadcasting services as in any one of claims 7 to 8, the display apparatus (200) comprising:
a communication part (230) which is configured to communicate with a set-top box (100);
a signal processor (210) which is configured to process the image signal transmitted by the set-top box (100);
a display unit (290) which is configured to display the processed image signal thereon;
a receiver (250) which is configured to process additional information of the image signal; and
a controller (270),
the controller (170) being configured:
to control the communication part (230) to receive an inquiry asking whether the display apparatus comprises at least one available receiver, from a set-top box (100), and to transmit to the set-top box (100) a response that the display apparatus comprises the at least one available receiver if the display apparatus comprises the at least one available receiver;
to process additional information of the image signal through at least one available receiver thereof in response to a request from the set-top box (100); and
to control the communication part (230) to transmit the processed additional information to the set-top box (100).

10. The display apparatus (200) according to claim 9, wherein broadcasting service information is transmitted by the set-top box (100) when the set-top box (100) requests the first display apparatus (200) to process the additional information of the image signal.

## Patentansprüche

1. Verfahren zum Steuern einer Set-Top-Box (100), um zu bestimmen, ob ein Benutzer eine Befugnis zum Verwenden von Inhalten eines Bildsignals, das mehreren Rundsendediensten entspricht, besitzt, wobei die Set-Top-Box (100) mit mehreren Anzeigevorrichtungen (200) innerhalb eines Netzwerks unter Verwendung desselben Frequenzbandes verbunden ist,
umfassend:
die Set-Top-Box (100) fragt eine erste Anzeigevorrichtung (200) der mehreren Anzeigevorrichtungen, ob die erste Anzeigevorrichtung mindestens einen verfügbaren Empfänger umfasst;
wobei, als Reaktion auf eine Antwort, dass die erste Anzeigevorrichtung den mindestens einen verfügbaren Empfänger umfasst,
die Set-Top-Box die erste Anzeigevorrichtung (200) auffordert, die zusätzlichen Informationen des Bildsignals über den mindestens einen verfügbaren Empfänger zu verarbeiten,
verarbeitete zusätzliche Informationen des Bildsignals von der ersten Anzeigevorrichtung (200) empfängt und
die verarbeiteten zusätzlichen Informationen des Bildsignals, die von der ersten Anzeigevorrichtung (200) empfangen werden, speichert,
als Reaktion auf eine Antwort, dass die erste Anzeigevorrichtung nicht den mindestens einen verfügbaren Empfänger umfasst,
die Set-Top-Box (100) das Auffordern der ersten Anzeigevorrichtung (200), die zusätzlichen Informationen des Bildsignals zu verarbeiten, unterbricht und bestimmt, ob mindestens eine zweite Anzeigevorrichtung (200) der mehreren Anzeigevorrichtungen mindestens einen verfügbaren Empfänger umfasst, um eine Verarbeitung der zusätzlichen Informationen des Bildsignals dahin anzufordern,
als Reaktion auf eine Antwort, dass die mindestens eine zweite Anzeigevorrichtung den mindestens einen verfügbaren Empfänger umfasst,
verarbeitete zusätzliche Informationen des Bildsignals von der mindestens einen zweiten Anzeigevorrichtung (200) empfängt und die verarbeiteten zusätzlichen Informationen des Bildsignals, die von der mindestens einen zweiten Anzeigevorrichtung (200) empfangen werden, speichert, und
falls ein Rundsendedienst durch eine Benutzereingabe zu einem der mehreren Rundsendedienste des Bildsignals geändert wird, Parsen der gespeicherten verarbeiteten zusätzlichen Informationen, um Berechtigungsverwaltungsinformationen zu erhalten, die in der Lage sind, die Befugnis zum Verwenden von Inhalten des Bildsignals zu bestimmen, und Vergleichen der erhaltenen Berechtigungsverwaltungsinformationen mit Daten in einer Smartcard der Set-Top-Box (100), um zu bestimmen, ob der Benutzer die Befugnis zum Verwenden eines Inhalts, der dem geänderten Rundsendedienst entspricht, besitzt.

2. Verfahren nach Anspruch 1, wobei die zusätzlichen Informationen des Bildsignals eine Programmassoziationstabelle (PAT), eine Programmabbildungstabelle (PMT) und eine Bedingungszugangstabelle (CAT) umfasst.

3. Verfahren nach einem vorangegangenen Anspruch, wobei das Auffordern der ersten Anzeigevorrichtung (200), die zusätzlichen Informationen des Bildsignals zu verarbeiten, ein Übertragen von Rundsendedienstinformationen zur ersten Anzeigevorrichtung (200) umfasst.

4. Verfahren nach Anspruch 3, wobei die Rundsendedienstinformationen eine Frequenz umfassen und die Anzeigevorrichtung (200) einen Empfänger in Form eines Tuners (251) zum Empfangen des Bildsignals umfasst.

5. Verfahren nach Anspruch 3, wobei die Rundsendedienstinformationen eine Internetprotokoll(IP)-Adresse umfassen und die Anzeigevorrichtung (200) einen Empfänger in Form eines IP-Eingabeteils (252) zum Empfangen des Bildsignals umfasst.

6. Verfahren zum Steuern einer Anzeigevorrichtung (200), die in der Lage ist, ein Bildsignal zu empfangen, das mehreren Rundsendediensten entspricht, wie in einem der Ansprüche 1 bis 5, umfassend:
die Anzeigevorrichtung empfängt eine Anfrage von einer Set-Top-Box (100), die fragt, ob die Anzeigevorrichtung mindestens einen verfügbaren Empfänger umfasst; falls die Anzeigevorrichtung den mindestens einen verfügbaren Empfänger umfasst, überträgt die Anzeigevorrichtung eine Antwort zur Set-Top-Box (100), dass die Anzeigevorrichtung den mindestens einen verfügbaren Empfänger umfasst,
die Anzeigevorrichtung empfängt eine Anforderung von der Set-Top-Box (100), zusätzliche Informationen des Bildsignals über den mindestens einen verfügbaren Empfänger davon zu verarbeiten;
die Anzeigevorrichtung verarbeitet die zusätzlichen Informationen des Bildsignals über den mindestens einen verfügbaren Empfänger davon und
die Anzeigevorrichtung überträgt die verarbeiteten zusätzlichen Informationen zur Set-Top-Box (100).

7. Set-Top-Box (100), die dazu ausgelegt ist, zu bestimmen, ob ein Benutzer eine Befugnis zum Verwenden von Inhalten eines Bildsignals, das mehreren Rundsendediensten entspricht, besitzt, wobei die Set-Top-Box (100) Folgendes umfasst:
einen Empfänger (150), der in der Lage ist, das Bildsignal zu empfangen;
einen Kommunikationsteil (130), der dazu ausgelegt ist, mit mehreren Anzeigevorrichtungen (200) zu kommunizieren;
einen Speicher (190) und
eine Steuerung (170),
wobei die Steuerung (170) zu Folgendem ausgelegt ist:
Steuern des Kommunikationsteils, eine erste Anzeigevorrichtung (200) der mehreren Anzeigevorrichtungen zu fragen, ob die erste Anzeigevorrichtung mindestens einen verfügbaren Empfänger umfasst,
Auffordern, als Reaktion auf eine Antwort, dass die erste Anzeigevorrichtung den mindestens einen verfügbaren Empfänger umfasst, von der ersten Anzeigevorrichtung, der ersten Anzeigevorrichtung (200), zusätzliche Informationen des Bildsignals über den mindestens einen verfügbaren Empfänger zu verarbeiten,
Empfangen von verarbeiteten zusätzlichen Informationen des Bildsignals von der ersten Anzeigevorrichtung (200) und
Speichern, im Speicher (190), der verarbeiteten zusätzlichen Informationen des Bildsignals, die von der ersten Anzeigevorrichtung (200) empfangen werden;
Bestimmen, als Reaktion auf eine Antwort, dass die erste Anzeigevorrichtung nicht den mindestens einen verfügbaren Empfänger umfasst, von der ersten Anzeigevorrichtung, ob mindestens eine zweite Anzeigevorrichtung (200) der mehreren Anzeigevorrichtungen mindestens einen verfügbaren Empfänger umfasst, um eine Verarbeitung der zusätzlichen Informationen des Bildsignals dahin anzufordern, und als Reaktion auf eine Antwort, dass die mindestens eine zweite Anzeigevorrichtung den mindestens einen verfügbaren Empfänger umfasst,
Empfangen von verarbeiteten zusätzlichen Informationen des Bildsignals von der mindestens einen zweiten Anzeigevorrichtung (200) und
Speichern, im Speicher (190), der verarbeiteten zusätzlichen Informationen des Bildsignals, die von der mindestens einen zweiten Anzeigevorrichtung (200) empfangen werden; und,
falls ein Rundsendedienst durch eine Benutzereingabe zu einem der mehreren Rundsendedienste des Bildsignals geändert wird, Parsen der verarbeiteten zusätzlichen Informationen, die im Speicher (190) gespeichert sind, um Berechtigungsverwaltungsinformationen zu erhalten, die in der Lage sind, die Befugnis zum Verwenden von Inhalten des Bildsignals zu bestimmen, Vergleichen der erhaltenen Berechtigungsverwaltungsinformationen mit Daten in einer Smartcard der Set-Top-Box (100), und Bestimmen, ob ein Benutzer die Befugnis zum Verwenden eines Inhalts, der dem geänderten Rundsendedienst entspricht, besitzt.

8. Set-Top-Box (100) nach Anspruch 7, wobei die zusätzlichen Informationen des Bildsignals PAT, PMT und CAT umfassen.

9. Anzeigevorrichtung (200), die in der Lage ist, ein Bildsignal zu empfangen, das mehreren Rundsendediensten entspricht, wie in einem der Ansprüche 7 bis 8, wobei die Anzeigevorrichtung (200) Folgendes umfasst:
einen Kommunikationsteil (230), der dazu ausgelegt ist, mit einer Set-Top-Box (100) zu kommunizieren;
einen Signalprozessor (210), der dazu ausgelegt ist, das Bildsignal, das durch die Set-Top-Box (100) übertragen wird, zu verarbeiten;
eine Anzeigeeinheit (290), die dazu ausgelegt ist, das verarbeitete Bildsignal darauf anzuzeigen;
einen Empfänger (250), der dazu ausgelegt ist, zusätzliche Informationen des Bildsignals zu verarbeiten; und
eine Steuerung (270),
wobei die Steuerung (170) zu Folgendem ausgelegt ist:
Steuern des Kommunikationsteils (230), eine Anfrage von einer Set-Top-Box (100) zu empfangen, die fragt, ob die Anzeigevorrichtung mindestens einen verfügbaren Empfänger umfasst, und Übertragen zur Set-Top-Box (100) einer Antwort, dass die Anzeigevorrichtung den mindestens einen verfügbaren Empfänger umfasst, falls die Anzeigevorrichtung den mindestens einen verfügbaren Empfänger umfasst;
Verarbeiten von zusätzlichen Informationen des Bildsignals über mindestens einen verfügbaren Empfänger davon als Reaktion auf eine Anforderung von der Set-Top-Box (100) und
Steuern des Kommunikationsteils (230), die verarbeiteten zusätzlichen Informationen zur Set-Top-Box (100) zu übertragen.

10. Anzeigevorrichtung (200) nach Anspruch 9, wobei Rundsendedienstinformationen durch die Set-Top-Box (100) übertragen werden, wenn die Set-Top-Box (100) die erste Anzeigevorrichtung (200) auffordert, die zusätzlichen Informationen des Bildsignals zu verarbeiten.

## Revendications

1. Procédé de commande d'un boîtier décodeur (100) pour déterminer si un utilisateur a autorité ou non pour utiliser des contenus d'un signal d'image correspondant à plusieurs services de diffusion, le boîtier décodeur (100) étant connecté à plusieurs appareils d'affichage (200) dans un réseau utilisant la même bande de fréquence, lequel comprend les étapes suivantes :
le boîtier décodeur (100) demande à un premier appareil d'affichage (200) de la pluralité d'appareils d'affichage si le premier appareil d'affichage comprend ou non au moins un récepteur disponible ;
suite à une réponse que le premier appareil d'affichage comprend l'au moins un récepteur disponible, le boîtier décodeur va :
- demander au premier appareil d'affichage (200) de traiter les informations additionnelles du signal d'image via l'au moins un récepteur disponible ;
- recevoir les informations additionnelles traitées du signal d'image depuis le premier appareil d'affichage (200), et
- stocker les informations additionnelles traitées du signal d'image reçues depuis le premier appareil d'affichage (200) ;
suite à une réponse que le premier appareil d'affichage ne comprend pas l'au moins un récepteur disponible, le boîtier décodeur (100) va :
- arrêter de demander au premier appareil d'affichage (200) de traiter les informations additionnelles du signal d'image, et
- déterminer si au moins un second appareil d'affichage (200) de la pluralité d'appareils d'affichage comprend ou non au moins un récepteur disponible pour demander de traiter les informations additionnelles du signal d'image à celui-ci,
suite à une réponse que l'au moins un second appareil d'affichage comprend l'au moins un récepteur disponible
- recevoir les informations additionnelles traitées du signal d'image depuis l'au moins un second appareil d'affichage (200), et
- stocker les informations additionnelles traitées du signal d'image reçues depuis l'au moins un second appareil d'affichage (200) ; et
si un service de diffusion est changé vers un des plusieurs services de diffusion du signal d'image par une entrée de l'utilisateur, analyser les informations additionnelles traitées stockées pour obtenir des informations de gestion d'autorisation pouvant déterminer l'autorité à utiliser des contenus du signal d'image et comparer les informations de gestion d'autorisation obtenues à des données dans une carte à puce du boîtier décodeur (100) afin de déterminer si l'utilisateur a autorité pour utiliser un contenu correspondant au service de diffusion changé.

2. Procédé selon la revendication 1, dans lequel les informations additionnelles du signal d'image comprennent une table d'association de programmes (PAT), une table de carte de programmes (PMT) et une table d'accès conditionnel (CAT).

3. Procédé selon l'une quelconque des revendications précédentes, dans lequel demander au premier appareil d'affichage (200) de traiter les informations additionnelles du signal d'image consiste à transmettre des informations de service de diffusion au premier appareil d'affichage (200).

4. Procédé selon la revendication 3, dans lequel les informations de service de diffusion comprennent une fréquence, et l'appareil d'affichage (200) comprend un récepteur sous forme d'un syntoniseur (251) pour recevoir le signal d'image.

5. Procédé selon la revendication 3, dans lequel les informations de service de diffusion comprennent une adresse de protocole Internet (IP), et l'appareil d'affichage (200) comprend un récepteur sous forme d'une partie d'entrée IP (252) pour recevoir le signal d'image.

6. Procédé de commande d'un appareil d'affichage (200) capable de recevoir un signal d'image correspondant à une pluralité de services de diffusion selon l'une quelconque des revendications 1 à 5, comprenant les étapes suivantes :
l'appareil d'affichage reçoit une interrogation d'un boîtier décodeur (100) demandant si un appareil d'affichage comprend ou non au moins un récepteur disponible ; si l'appareil d'affichage comprend l'au moins un récepteur disponible, l'appareil d'affichage transmet une réponse au boîtier décodeur (100) indiquant que l'appareil d'affichage comprend l'au moins un récepteur disponible ;
l'appareil d'affichage reçoit une demande du boîtier décodeur (100) pour traiter des informations additionnelles du signal d'image via l'au moins un récepteur disponible de celui-ci ;
l'appareil d'affichage traite les informations additionnelles du signal d'image via l'au moins un de ses récepteurs disponibles ; et
l'appareil d'affichage transmet les informations additionnelles traitées au boîtier décodeur (100).

7. Boîtier décodeur (100) conçu pour déterminer si un utilisateur a autorité ou non pour utiliser des contenus d'un signal d'image correspondant à plusieurs services de diffusion, le boîtier décodeur (100) comprenant :
un récepteur (150) capable de recevoir le signal d'image ;
une partie de communication (130) conçue pour communiquer avec plusieurs appareils d'affichage (200) ;
un stockage (190) ; et
un contrôleur (170), le contrôleur (170) étant conçu pour :
- commander la partie de communication pour demander à un premier appareil d'affichage (200) de la pluralité d'appareils d'affichage si le premier appareil d'affichage comprend ou non au moins un récepteur disponible ;
- demander, suite à une réponse du premier appareil d'affichage que le premier appareil d'affichage comprend l'au moins un récepteur disponible, au premier appareil d'affichage (200) de traiter les informations additionnelles du signal d'image via l'au moins un récepteur disponible ;
- recevoir les informations additionnelles traitées du signal d'image depuis le premier appareil d'affichage (200), et
- stocker, dans le stockage (190), les informations additionnelles traitées du signal d'image reçues depuis le premier appareil d'affichage (200) ;
déterminer, suite à une réponse du premier appareil d'affichage que le premier appareil d'affichage ne comprend pas l'au moins un récepteur disponible, si au moins un second appareil d'affichage (200) de la pluralité d'appareils d'affichage comprend ou non au moins un récepteur disponible pour demander de traiter les informations additionnelles du signal d'image à celui-ci, et suite à une réponse que l'au moins un second appareil d'affichage comprend l'au moins un récepteur disponible
- recevoir les informations additionnelles traitées du signal d'image depuis l'au moins un second appareil d'affichage (200), et
- stocker, dans le stockage (190), les informations additionnelles traitées du signal d'image reçues depuis l'au moins un second appareil d'affichage (200) ; et
si le service de diffusion est changé vers un des plusieurs services de diffusion du signal d'image par une entrée de l'utilisateur, analyser les informations additionnelles traitées stockées dans le stockage (190) pour obtenir des informations de gestion d'autorisation pouvant déterminer l'autorité à utiliser des contenus du signal d'image, comparer les informations de gestion d'autorisation obtenues à des données dans une carte à puce du boîtier décodeur (100), et déterminer si un utilisateur a autorité ou non pour utiliser un contenu correspondant au service de diffusion changé.

8. Boîtier décodeur (100) selon la revendication 7, dans lequel les informations additionnelles du signal d'image comprennent des PAT, PMT et CAT.

9. Appareil d'affichage (200) capable de recevoir un signal d'image correspondant à plusieurs services de diffusion selon l'une quelconque des revendications 7 à 8, l'appareil d'affichage (200) comprenant :
une partie de communication (230) conçue pour communiquer avec un boîtier décodeur (100) ;
un processeur de signaux (210) conçu pour traiter le signal d'image transmis par le boîtier décodeur (100) ;
une unité d'affichage (290) conçue pour afficher le signal d'image traité sur celle-ci ;
un récepteur (250) conçu pour traiter des informations additionnelles du signal d'image ; et
un contrôleur (270), le contrôleur (170) étant conçu pour :
commander la partie de communication (230) pour recevoir une interrogation d'un boîtier décodeur (100) demandant si l'appareil d'affichage comprend ou non au moins un récepteur disponible, et transmettre au boîtier décodeur (100) une réponse indiquant que l'appareil d'affichage comprend l'au moins un récepteur disponible si l'appareil d'affichage comprend l'au moins un récepteur disponible ;
traiter les informations additionnelles du signal d'image via au moins un récepteur disponible de celui-ci suite à une demande du boîtier décodeur (100) ; et
commander la partie de communication (230) pour transmettre les informations additionnelles traitées au boîtier décodeur (100).

10. Appareil d'affichage (200) selon la revendication 9, dans lequel les informations de service de diffusion sont transmises par le boîtier décodeur (100) lorsque le boîtier décodeur (100) demande au premier appareil d'affichage (200) de traiter les informations additionnelles du signal d'image.
